# EUROPÄISCHE PATENTANMELDUNG

(11) **EP 1 690 780 A2**
(43) Veröffentlichungstag der Anmeldung: **16.08.2006**
(21) Anmeldenummer: 06001586.4
(22) Anmeldetag: 26.01.2006
(51) Int. Cl.: B62D 25/06

(54) **Dachanordnung für Kraftfahrzeuge**

(30) Priorität: 11.02.2005 DE 102005006201
(71) Anmelder: AUDI AG, 85045 Ingolstadt (DE)
(72) Erfinder: Winkler, Andreas, 74074 Heilbronn (DE); Haffner, Peter, 32683 Barntrup (DE)
(74) Vertreter: Patzelt, Heike Anna Maria

(57) **Zusammenfassung**

Die Erfindung betrifft Dachanordnung (10) für ein Kraftfahrzeug, die eine Verstärkungsstruktur umfasst. Die Dachanordnung (10) besteht aus der Verstärkungsstruktur und einer Dachaußenhaut (13). Die Verstärkungsstruktur weist zumindest eine Schrägverstärkung (141, 142, 171, 172) auf. Durch diese Dachanordnung (10) kann die Karosseriesteifigkeit erhöht werden.

## Beschreibung

Die Erfindung betrifft eine Dachanordnung für ein Kraftfahrzeug, insbesondere eine verstärkte Dachanordnung.

Der Dachbereich eines Fahrzeuges besteht heutzutage meist aus einer Dachaußenhaut und einem vorderen und hinteren Dachrahmen, die sich jeweils in Breitenrichtung des Fahrzeuges erstrecken. Der Querschnitt dieser Dachrahmen ist hierbei über die Fahrzeugbreite annährend gleichmäßig. Zur zusätzlichen Verstärkung können bei diesen Fahrzeugen ein oder mehrere Dachspriegel verbaut sein. Diese werden beispielsweise im Bereich der B-Säule des Fahrzeuges vorgesehen und sind ebenfalls in der Richtung der Fahrzeugbreite orientiert.

Der Nachteil dieser Dachbereiche liegt zum einen in der relativ aufwendigen Montage, da die Dachspriegel einzeln an dem Dach oder einer anderen Komponente des Fahrzeuges befestigt werden müssen. Darüber hinaus liefert diese Art des Dachbereiches nur eine verhältnismäßig geringe Karosseriesteifigkeit.

Die Aufgabe, die der vorliegenden Erfindung zugrunde liegt, besteht daher darin, eine Dachanordnung zu schaffen, die zum einen auf einfache Weise hergestellt und montiert werden kann und zugleich eine Verbesserung der Karosseriesteifigkeit liefert.

Der Aufgabe wird erfindungsgemäß gelöst durch eine Dachanordnung, die eine Verstärkungsstruktur umfasst, wobei sich die Dachanordnung dadurch auszeichnet, dass die Verstärkungsstruktur mindestens eine Schrägverstärkung aufweist.

Unter Schrägverstärkung wird ein Element der Verstärkungsstruktur verstanden, das sich in einer Richtung erstreckt, die weder in der Breitenrichtung noch in der Querrichtung des Kraftfahrzeuges liegt. Die Schrägverstärkung muss hierbei nicht gradlinig ausgeführt sein, sondern kann beispielsweise eine Krümmung oder Wölbung aufweisen.

Durch diese Ausgestaltung der Verstärkungsstruktur werden, außer den im Stand der Technik durch die Dachrahmen gegebenen Verbindungspunkte für die Seitenholme des Dachrahmens, weitere Verbindungspfade zwischen einzelnen Komponenten des Fahrzeuges geschaffen. Insbesondere können die Seitenholme des Dachrahmens über die Schrägverstärkungen gegeneinander abgestützt werden. Weiterhin können auch Komponenten, die über die Längsrichtung des Kraftfahrzeuges verteilt und beabstandet voneinander angeordnet sind, wie beispielsweise ein Dachrahmen hinten und ein Profil beziehungsweise ein Träger für ein Schiebedach, durch die mindestens eine Schrägverstärkung gegeneinander fixiert werden. Durch diese zusätzlichen Verbindungspfade wird die Stabilität der Karosserie erhöht.

Obwohl es erfindungsgemäß möglich ist Schrägverstärkungen vorzusehen, die sich nur über einen Teil der Breite des Fahrzeugdaches erstrecken, ist es bevorzugt, dass sich die mindestens eine Schrägverstärkung über die gesamte Breite des Daches des Fahrzeuges erstreckt. Als Breite des Daches wird in diesem Zusammenhang der Abstand zwischen seitlichen Karosserieteilen, insbesondere zwischen seitlichen Dachrahmen, bezeichnet. Durch diese Länge der Schrägverstärkungen kann ein durchgehender Verbindungspfad zwischen den Seitenholmen erzeugt werden, der eine Verbesserung der Kraftleitung mit sich bringt und so die Stabilität der Gesamtkarosserie verbessert.

Gemäß einer Ausführungsform sind mindestens zwei Schrägverstärkungen so angeordnet, dass diese sich kreuzen. Bei dieser Ausgestaltung können die sich kreuzenden Verstärkungen auch einteilig ausgebildet sein und so eine Verstärkungsstruktur erzeugen, die ein Kreuzform bilden. Die Schrägverstärkungen liegen hierbei vorzugsweise in einer Ebene, so dass die Verstärkungsstruktur lediglich die Höhe einer der Schrägverstärkungen aufweist. Durch die Kreuzung der Schrägverstärkungen wird zwischen diesen ein Fixierung erzeugt, die eine Verformung der einzelnen Schrägverstärkungen verhindert.

In der Verstärkungsstruktur kann zudem die mindestens eine Schrägverstärkung mit mindestens einem Querträger verbunden sein. Als Querträger wird in diesem Zusammenhang ein Träger verstanden, der in der Breitenrichtung des Fahrzeuges liegt. Besonders bevorzugt ist die mindestens eine Schrägverstärkung mit dem Dachrahmen hinten verbunden. Der Querträger kann aber beispielsweise auch ein Querspriegel sein, der an der Öffnung für ein Schiebedach vorgesehen wird. Die Verbindung kann hierbei durch bekannte Verbindungstechniken erfolgen. So können die Teile beispielsweise miteinander verschweißt oder verklebt werden. Es ist erfindungsgemäß aber auch möglich und bevorzugt den mindestens einen Querträger mit der mindestens einen Schrägverstärkung integral zu fertigen. Zu diesem Zweck kann beispielsweise ein offenes Profil, wie ein tiefgezogenes Blech, oder ein Hohlprofil verwendet werden, das die einzelnen Komponenten beinhaltet. Vorzugsweise sind die Schrägverstärkungen stegförmig ausgestaltet, so dass zwischen den Schrägverstärkungen und dem Querträger, außer an den Enden der Schrägverstärkung, kein Kontakt besteht. Auf diese Weise kann das Gewicht der Verstärkungsstruktur gegenüber einer Verstärkungsstruktur, die als Platte ausgestaltet ist und den gesamten Bereich zwischen den Seitenholmen abdeckt, gering gehalten werden.

Besonders bevorzugt weist die erfindungsgemäße Dachanordnung mindestens zwei Querträger auf und die mindestens eine Schrägverstärkung erstreckt sich zwischen diesen Querträgern. Auf diese Weise kann ein fester Verbund zwischen den Querträgern geschaffen werden, der die Montage der Dachstruktur vereinfacht und zudem die Stabilität des Dachbereiches und der Gesamtkarosserie erhöht. Die mindestens zwei Querträger sind beispielsweise der Dachrahmen hinten und ein Querspriegel, der für die Aufnahme des Schiebedaches vorgesehen ist. Hierdurch kann mit der Verstärkungsstruktur der gesamte hintere Dachbereich abgedeckt werden. Auch bei dieser Ausführungsform können die Schrägverstärkungen mit den Querträgern integral gefertigt sein oder an diesen befestigt werden.

Besonders bevorzugt wird die Verstärkungsstruktur durch eine Profilstruktur gebildet, die im einfachsten Fall ein offenes Profil darstellen kann. Die Profilstruktur kann mit der Dachaußenhaut des Fahrzeuges verbunden werden. In diesem Fall kann das Profilblech beispielsweise durch Stützkleber an der Dachaußenhaut befestigt werden. Sind in dieser Verstärkungsstruktur außer den Schrägverstärkung auch Querträger vorgesehen, so werden auch diese durch die Profilstruktur gebildet werden. Im Bereich der Querträger kann eine Verbindung zu der Dachaußenhaut beispielsweise durch Verschweißen an Flanschen an den einzelnen Elementen erfolgen.

Alternativ ist es aber auch möglich die Verstärkungsstruktur durch ein selbst tragendes Profil, insbesondere ein Hohlprofil, zu bilden. Das Hohlprofil kann beispielsweise durch das Zusammenfügen eines Ober- und eines Unterteils gebildet werden, wobei wahlweise in dem Oberteil und/oder dem Unterteil eine entsprechende Profilierung vorgesehen sein kann. Vorzugsweise besitzen das Ober- und Unterteil die Form der zu bildenden Verstärkungsstruktur und weisen an den Rändern Flansche auf, die zum einen zur Verbindung der beiden Teile dienen können und insbesondere an den Grenzbereichen zu der Frontscheibe, der Heckscheibe oder einem gegebenenfalls vorgesehenen Schiebedach als Auflagefläche für diese Scheiben dienen können.

Gemäß einer Ausführungsform erstreckt sich die Verstärkungsstruktur über die gesamte Fläche des Daches des Fahrzeuges. Hierbei werden die Bereiche, die nicht von einem Schiebedach abgedeckt sind, zumindest teilweise von den Schrägverstärkungen abgedeckt. In einer Ausführungsform wird die Verstärkungsstruktur somit durch einen hinteren Querträger, eine damit verbundene kreuzförmige Schrägverstärkungsstruktur, einen Querspriegel für eine hintere Auflage eines Schiebedachs, einen damit über Seitenverstärkungen verbundenen Querspriegel für eine vordere Auflage des Schiebedachs, eine weiter damit verbundene kreuzförmige Schrägverstärkungsstruktur, sowie einen vorderen Querträger gebildet. Der vordere Querträger kann mit der vorderen Kreuzstruktur auch einteilig ausgebildet sein und beispielsweise eine flächige Ausgestaltung aufweisen, bei der die Kreuzstruktur lediglich durch Aussparungen an den Rändern zu den Seitenholmen und zu dem Schiebedach gebildet wird.

Es ist erfindungsgemäß aber auch möglich die Verstärkungsstruktur auf eine Kreuzstruktur und einen damit verbundenen Querträger zu beschränken. Diese Struktur kann im hinteren Dachbereich, das heißt hinter einem Schiebedach und/oder davor eingesetzt werden und mit einem Profil, das für das Schiebedach vorgesehen ist, verbunden werden.

Die erfindungsgemäße Dachanordnung kann durch eine lösbare oder unlösbare Verbindungstechnik mit der Karosserie verbunden werden. So kann die Dachanordnung mit der Karosserie, beispielsweise den Seitenholmen, der C-Säule oder der B-Säule, zum Beispiel verschweißt oder verschraubt werden.

Die Dachanordnung kann erfindungsgemäß aus einem oder mehreren Halbzeugen bestehen. Insbesondere können zumindest Teile der Dachanordnung aus Blechen, beispielsweise gebogenen oder tiefgezogenen Blechen, Strangpressprofilen, Gussteilen und/oder Pressteilen hergestellt sein. Als Material für die Dachanordnung kann beispielsweise Aluminium, Aluminiumlegierung, Stahl, Magnesium, Kunststoff und/oder ein Verbund aus diesen Materialien verwendet werden.

Die Erfindung wird im Folgenden anhand der beiliegenden Zeichnungen erneut erläutert. Es zeigen:
Figur 1: eine schematische Perspektivansicht der Dachanordnung eines Fahrzeuges nach dem Stand der Technik;
Figur 2: eine schematische Perspektivansicht einer Ausführungsform der Dachanordnung gemäß der Erfindung;
Figuren 3 bis 5: schematische Längsschnittansichten von Ausführungsformen der Dachanordnung entlang der Schnittlinie A - A in Figur 2; und
Figuren 6 bis 8: schematische Querschnittansichten von Ausführungsformen der Dachanordnung entlang der Schnittlinie B - B in Figur 2.

Die Figuren sind nicht maßstabsgetreu.

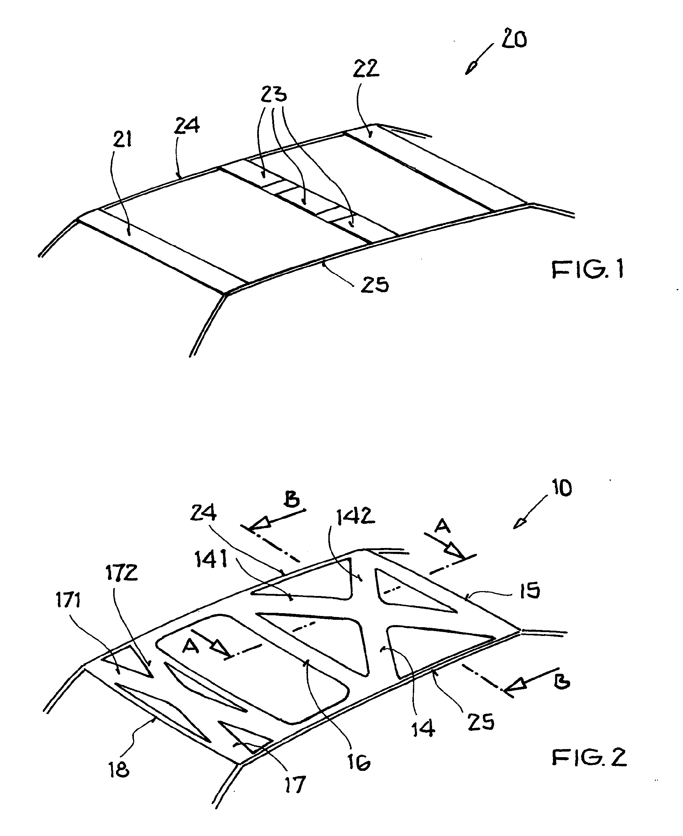

In Figur 1 ist die Dachanordnung 20 eines Fahrzeuges nach dem Stand der Technik gezeigt. Diese Dachanordnung 20 umfasst einen vorderen Dachrahmen 21 und einen hinteren Dachrahmen 22. Der vordere und der hintere Dachrahmen 21, 22 erstrecken sich zwischen den Seitenholmen 24 und 25 des Daches und besitzen über die Fahrzeugbreite einen annährend gleichmäßigen Querschnitt. Zwischen diesen beiden Dachrahmen 21, 22 sind im mittleren Bereich des Fahrzeuges Dachspriegel 23 verbaut. In der dargestellten Dachanordnung 20 sind drei Dachspriegel 23 über die Breite des Daches verteilt und jeweils in Querrichtung des Fahrzeuges ausgerichtet, das heißt parallel zu den Dachrahmen 21, 22 angeordnet.
Die Dachrahmen 21, 22 und Dachspriegel 23 werden von der Dachaußenhaut (nicht dargestellt) abgedeckt und sind zumindest teilweise mit dieser verbunden.

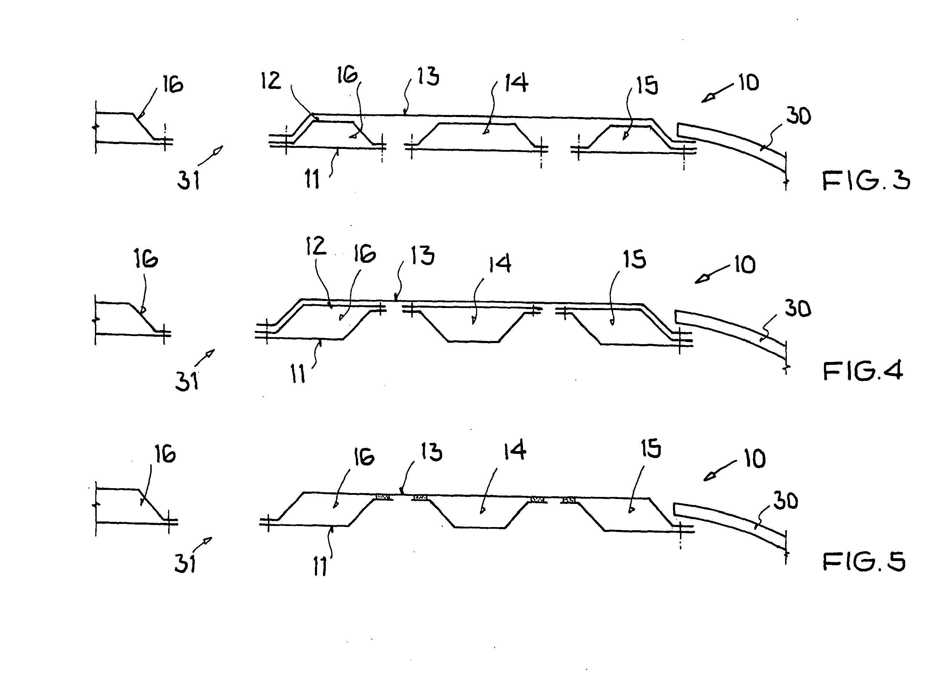

In Figur 2 ist eine Ausführungsform der Dachanordnung 10 nach der vorliegenden Erfindung gezeigt. Die Dachanordnung besteht aus einer Verstärkungsstruktur und einer Dachaußenhaut (Bezugsziffer 13 in den Figuren 3 bis 8). Die Verstärkungsstruktur wird in der dargestellten Ausführungsform durch eine Kreuzstruktur 14 gebildet, die zwischen einem Dachrahmen hinten 15 und einer Profilstruktur 16 für die Schiebdachöffnung 31 eingebracht ist. Weiterhin umfasst die Verstärkungsstruktur eine weitere Kreuzstruktur 17, die zwischen der vorderen Kante der Profilstruktur 16 der Schiebedachöffnung 31 und dem vorderen Dachrahmen 18 eingebracht ist.

Die Kreuzstrukturen 14 und 17 decken somit die Bereiche des Daches ab, die nicht für ein Schiebedach benötigt werden.

Obwohl die Kreuzstruktur 14 als separates Bauteil zwischen der Profilstruktur 16 und dem Dachrahmen hinten 15 eingebracht und mit diesen Teilen verbunden werden kann, ist es vorteilhaft den Dachrahmen hinten 15 und die Kreuzstruktur 14 als integrales Bauteil zu fertigen. Auch die Profilstruktur 16 beziehungsweise zumindest der Querspriegel, der der Kreuzstruktur 14 zugewandt ist, kann mit der Kreuzstruktur 14 einteilig ausgestaltet sein. Entsprechendes gilt auch für die Kreuzstruktur 14 vorne 17. Diese kann mit dem vorderen Dachrahmen 18 und / oder dem vorderen Querspriegel der Profilstruktur 16 integral ausgestaltet sein.
In der dargestellten Ausführungsform sind in der Verstärkungsstruktur der Dachanordnung 10 im Bereich jeder der Kreuzstrukturen 14, 17 jeweils zwei Schrägverstärkungen 141, 142, 171 und 172 gegeben, über die sowohl ein Verbund zwischen den Seitenholmen 24 und 25 als auch eine Verbindung zwischen den Dachrahmen 15 und 18 und der Profilstruktur 16 für das Schiebedach gegeben ist. Auf diese Weise erhält die Verstärkungsstruktur eine hohe Stabilität und kann somit die Karosseriesteifigkeit erhöhen und die Verstärkungsstruktur kann einfach in der Karosserie des Fahrzeuges verbaut werden.

In den Figuren 3 bis 5 sind Ausführungsformen im Längsschnitt entlang der Schnittlinie A-A in Figur 2 gezeigt, nach denen die Verstärkungsstruktur aufgebaut sein kann. Bei den in Figuren 3 und 4 gezeigten Ausführungsformen stellt die Verstärkungsstruktur eine selbst tragende Struktur dar. In diesen Fällen wird die Verstärkungsstruktur jeweils durch ein Unterteil 11 und ein Oberteil 12 gebildet. Diese sind miteinander verbunden und am Rand mit der Dachaußenhaut 13 verbunden, zum Beispiel verschweißt. Die Kontur des Dachrahmens hinten 15, der Kreuzstruktur 14 und der Profilstruktur 16 werden bei diesen Ausführungsformen durch die Profilierung des Oberteils 12 (Figur 3) beziehungsweise des Unterteils 11 (Figur 4) gebildet. Insbesondere bei einer integralen Ausgestaltung des Dachrahmens hinten 15, der Kreuzstruktur 14 und der Profilstruktur 16 ist über die Fläche der Kreuzstruktur 14 eine Verbindung zur Dachaußenhaut 13 nicht erforderlich. Die Verstärkungsstruktur wird bei diesen Ausgestaltungen nämlich ausreichend durch den Kontakt zu den Seitenholmen 24 und 25, sowie durch die Verbindung mit der Dachaußenhaut 13 an dem Dachrahmen hinten 15 und gegebenenfalls an der Profilstruktur 16 getragen.

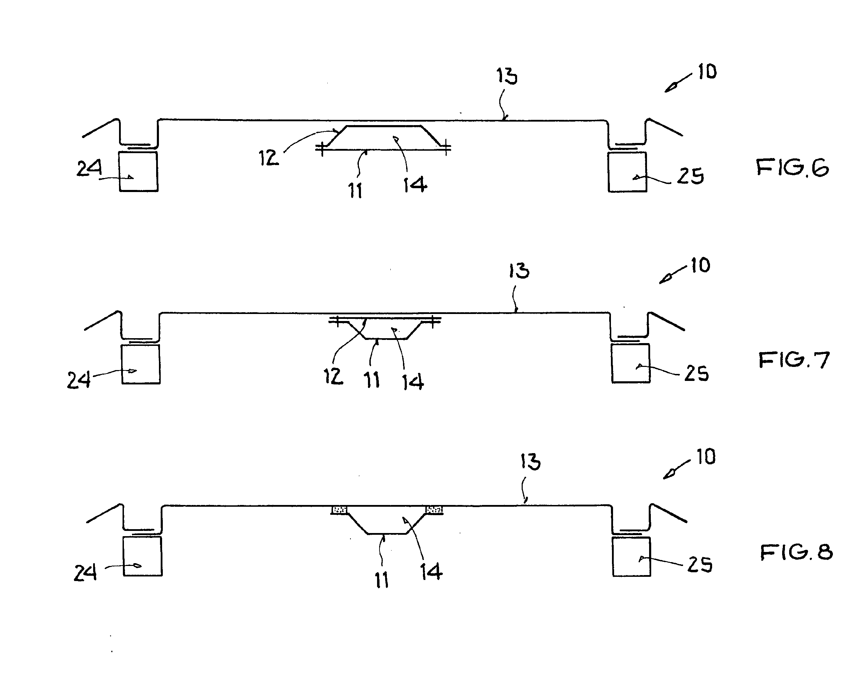

In der Figur 5 ist eine weitere Ausführungsform gezeigt, bei der die Verstärkungsstruktur nur aus einem Unterteil 11 besteht und über die Fläche des Daches mit der Dachaußenhaut 13 verbunden, insbesondere verklebt, ist. Auch bei dieser Ausführungsform kann an den Rändern, insbesondere an dem hinteren Dachrahmen 15 und der Profilstruktur die Verstärkungsstruktur mit der Dachaußenhaut 13 verschweißt sein.

In den Figuren 6 bis 8 sind die Ausführungsformen der Figuren 5 bis 7 im Querschnitt entlang der Schnittlinie B-B in Figur 2, das heißt in Breitenrichtung des Fahrzeuges, gezeigt.

Wie sich aus diesen Schnittansichten ergibt, ist bei der erfindungsgemäßen Dachanordnung 10 über die Breite des Daches in dessen Mitte eine Verstärkung 14 vorgesehen. Diese ist bei den Ausführungsformen nach Figuren 6 und 7 im mittleren Bereich nicht mit der Dachaußenhaut 13 verbunden. An den Seiten liegt die Dachaußenhaut 13 der Dachanordnung 10 auf den seitlichen Dachrahmen 24 und 25 auf. In der Ausführungsform nach Figur 8 hingegen ist die einteilige, nur aus dem Unterteil 11 bestehende, Verstärkungsstruktur über deren Fläche mit der Dachaußenhaut 13 verklebt, die auch bei dieser Ausführungsform an den Seiten auf den seitlichen Dachrahmen 24 und 25 aufliegt.

Die Verstärkungsstruktur beziehungsweise die Dachanordnung kann erfindungsgemäß mit der Karosserie, beispielsweise den seitlichen Dachrahmen, lösbar oder unlösbar verbunden sein.

Die Erfindung ist nicht auf die dargestellten Ausführungsformen beschränkt.

Insbesondere kann durch die Schrägverstärkungen auch eine von der gezeigten Kreuzform abweichende Form gebildet werden. So kann beispielsweise eine Sternstruktur mit drei oder mehr Schrägverstärkungen verwendet werden.

Im Sinne der Erfindung ist es möglich die Verstärkungsstruktur mehrteilig auszugestalten. Hierbei können beispielsweise lediglich der hintere Dachrahmen und die Schrägverstärkungen für den hinteren Bereich integral ausgestaltet sein und die Verstärkungen für das Schiebedach separat ausgebildet sein. Ist kein Schiebedach vorgesehen, so kann die gesamte Fläche des Daches mit der Verstärkungsstruktur abgedeckt sein. Hierbei können eine oder mehrere Kreuzstrukturen, Sternstrukturen und dergleichen verwendet werden.

Es ist im Rahmen der Erfindung auch möglich die Verstärkungsstruktur so auszugestalten, dass diese nur die Schrägverstärkungen umfasst, die vorzugsweise miteinander verbunden und besonders bevorzugt integral ausgestaltet sind, und mit an der Karosserie vorgesehenen Querträgern verbunden, insbesondere verschweißt werden.

Durch die erfindungsgemäße Dachanordnung wird eine Erhöhung der Karosseriesteifigkeit des Fahrzeuges erzielt.

## Patentansprüche

1. Dachanordnung für ein Kraftfahrzeug, die eine Verstärkungsstruktur umfasst, **dadurch gekennzeichnet, dass** die Verstärkungsstruktur mindestens eine Schrägverstärkung (141, 142, 171, 172) aufweist.

2. Dachanordnung nach Anspruch 1, **dadurch gekennzeichnet, dass** die Schrägverstärkung (141, 142, 171, 172) sich über die gesamte Breite des Daches des Kraftfahrzeuges erstreckt.

3. Dachanordnung nach einem der Ansprüche 1 oder 2, **dadurch gekennzeichnet, dass** mindestens zwei Schrägverstärkungen (141, 142, 171, 172) so angeordnet sind, dass diese sich kreuzen.

4. Dachanordnung nach einem der Ansprüche 1 bis 3, **dadurch gekennzeichnet, dass** die mindestens eine Schrägverstärkung (141, 142, 171, 172) mit mindestens einem Querträger (15, 16, 18) verbunden ist.

5. Dachanordnung nach einem der Ansprüche 1 bis 4, **dadurch gekennzeichnet, dass** diese mindestens zwei Querträger (15, 16, 18) umfasst, die sich in der Breitenrichtung des Fahrzeuges erstrecken, und sich die mindestens eine Schrägverstärkung (141, 142, 171, 172) zwischen den mindestens zwei Querträgern (15, 16, 18) erstreckt.

6. Dachanordnung nach einem der Ansprüche 1 bis 5, **dadurch gekennzeichnet, dass** die mindestens eine Schrägverstärkung (141, 142, 171, 172) mit mindestens einem Querträger (15, 16, 18) integral ausgestaltet ist.

7. Dachanordnung nach einem der Ansprüche 1 bis 6, **dadurch gekennzeichnet, dass** die Verstärkungsstruktur aus mindestens einem Profilblech (11, 12) besteht, das mit der Dachaußenhaut (13) des Kraftfahrzeuges verbunden werden kann.

8. Dachanordnung nach einem der Ansprüche 1 bis 7, **dadurch gekennzeichnet, dass** die Verstärkungsstruktur sich über die gesamte Länge des Daches erstreckt.

9. Dachanordnung nach Anspruch 8, **dadurch gekennzeichnet, dass** die Verstärkungsstruktur mindestens eine Aussparung (31) für eine Schiebedach aufweist.

10. Dachanordnung nach einem der Ansprüche 1 bis 9, **dadurch gekennzeichnet, dass** diese durch eine lösbare oder unlösbare Verbindungstechnik mit der Karosserie verbunden ist.

11. Dachanordnung nach einem der Ansprüche 1 bis 10, **dadurch gekennzeichnet, dass** diese aus Aluminium, Stahl, Magnesium, Kunststoff und/oder einem Verbund aus diesen Materialien besteht.

12. Dachanordnung nach einem der Ansprüche 1 bis 11, **dadurch gekennzeichnet, dass** diese aus Blech, Strangpressprofilen, Gussteilen und/oder Pressteilen besteht.
